# EUROPEAN PATENT APPLICATION

(11) **EP 4 345 927 A2**
(43) Date of publication of application: **03.04.2024**
(21) Application number: 22185928.3
(22) Date of filing: 20.07.2022
(51) Int. Cl.: H01M 4/00

(54) **BATTERY SHELF, ENERGY STORAGE FRAME, AND ENERGY STORAGE BATTERY CLUSTER**

(30) Priority: 25.03.2022 CN 202210298984
(71) Applicant: CALB Co., Ltd., Changzhou City, Jiangsu Province (CN)
(72) Inventor: LI, Wei, Luoyang City, Henan Province (CN); SHI, Tengteng, Luoyang City, Henan Province (CN); LI, Fei, Luoyang City, Henan Province (CN)
(74) Representative: Becker, Eberhard

(57) **Abstract**

The disclosure provides a subrack storage frame (100), an energy storage frame (200), and an energy storage battery cluster. The subrack storage frame (100) includes a first beam (10) formed by bending a sheet metal. The first beam (10) includes a limiting plate (11), a supporting plate (12), and a reinforcing plate (13). The limiting plate (11) and the reinforcing plate (13) are respectively connected to two sides of the supporting plate (12). The limiting plate (11) is located above the supporting plate (12). The reinforcing plate (13) is located below the supporting plate (12). The supporting plate (12) is configured to support a battery subrack. The limiting plate (11) is configured to abut the battery subrack along an insertion direction of the battery subrack.

## Description

### BACKGROUND

### Technical Field

The disclosure relates to the technical field of batteries, in particular to a subrack storage frame and an energy storage frame.

### Description of Related Art

The energy storage equipment is a new energy equipment that stores a battery subrack in the energy storage frame. Specifically, the battery subrack is placed on the subrack storage frame of the energy storage frame and is supported and positioned through a placement beam of the subrack storage frame. However, the currently used placement beam has a simple structure, has relatively low strength, and is not conducive to assembly, which is not conducive to the stable placement of a large battery subrack.

### SUMMARY

The disclosure provides a subrack storage frame, which includes a first beam formed by bending a sheet metal. The first beam includes a limiting plate, a supporting plate, and a reinforcing plate. The limiting plate and the reinforcing plate are respectively connected to two sides of the supporting plate. The limiting plate is located above the supporting plate. The reinforcing plate is located below the supporting plate. The supporting plate is configured to support a battery subrack. The limiting plate is configured to abut the battery subrack along an insertion direction of the battery subrack.

The disclosure provides an energy storage frame, which includes the subrack storage frame.

The energy storage frame of the disclosure has the subrack storage frame, so the energy storage frame has the advantage of being able to stably place a large battery subrack.

The disclosure provides an energy storage battery cluster, which includes the energy storage frame and at least one battery subrack, and the battery subrack is inserted into the energy storage frame.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram of a three-dimensional structure of a subrack storage frame of the disclosure.
FIG. 2 is a schematic diagram of a three-dimensional structure of a first beam in the subrack storage frame shown in FIG. 1.
FIG. 3 is a schematic diagram of a cross-sectional three-dimensional structure of the first beam shown in FIG. 2.
FIG. 4 is a schematic diagram of a three-dimensional structure of an energy storage frame of the disclosure.
FIG. 5 is a schematic diagram of a structure of an energy storage battery cluster of the disclosure.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

### Embodiment 1

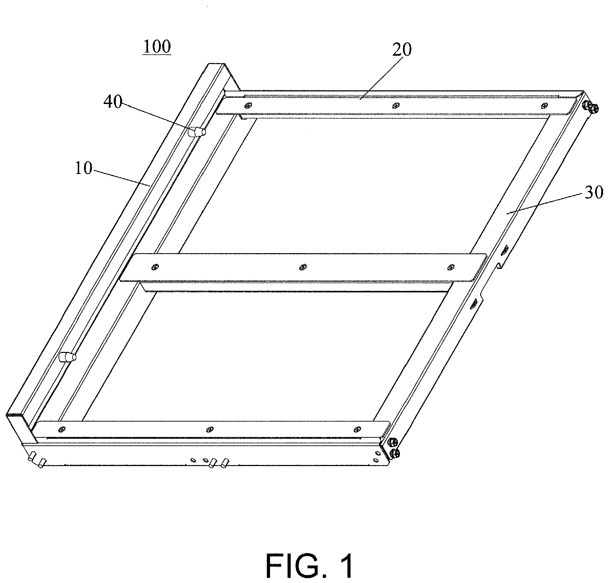

As shown in FIG. 1, the disclosure provides a subrack storage frame 100, which is used on an energy storage frame 200. The subrack storage frame 100 includes a first beam 10. Specifically, the subrack storage frame 100 includes a first beam 10, two second beams 20, and a third beam 30. The first beam 10, the two second beams 20, and the third beam 30 surround to form a rectangular frame structure. The third beam 30 and the first beam 10 are oppositely disposed, and the two second beams 20 are oppositely disposed. Preferably, the structures of the two second beams 20 are the same.

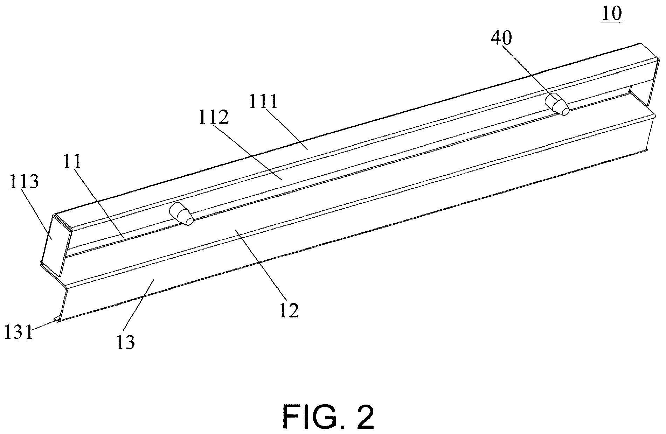

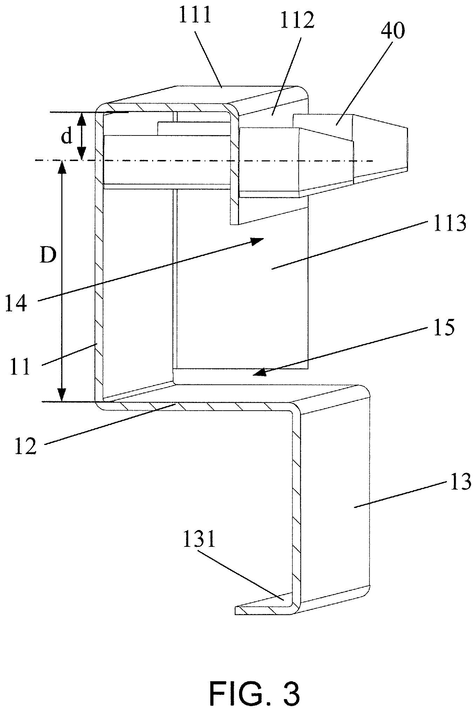

As shown in FIG. 2 and FIG. 3, the first beam 10 is formed by bending a sheet metal. The first beam 10 includes a limiting plate 11, a supporting plate 12, and a reinforcing plate 13, that is, the limiting plate 11, the supporting plate 12, and the reinforcing plate 13 is an integral structure formed by bending the sheet metal. The limiting plate 11 and the reinforcing plate 13 are respectively connected to two sides of the supporting plate 12. The limiting plate 11 is located above the supporting plate 12. The reinforcing plate 13 is located below the supporting plate 13. Specifically, the supporting plate 12 is in the shape of a long plank. The supporting plate 12 is placed horizontally. Two sides of the supporting plate 12 in the length direction are respectively connected to the limiting plate 11 and the reinforcing plate 13. The lower end of the limiting plate 11 is connected to the supporting plate 12. The upper end of the reinforcing plate 13 is connected to the supporting plate 12. Preferably, the limiting plate 11 and the reinforcing plate 13 are disposed parallel to each other. The reinforcing plate 13 is located on the front side of the supporting plate 12. The limiting plate 11 is located on the rear side of the supporting plate 12. The supporting plate 12 is configured to support a battery subrack. The limiting plate 11 is configured to abut the battery subrack along an insertion direction of the battery subrack, that is, the limiting plate 11 is disposed at the rear part of the insertion direction of the battery subrack and is used to limit an insertion position of the battery subrack. Specifically, during use, the battery subrack is placed on the subrack storage frame 100 and is limited by the limiting plate 11 to prevent the battery subrack from being suspended, that is, to prevent the battery subrack from being over-inserted. At the same time, the supporting strength of the supporting plate 12 is strengthened through the reinforcing plate 13, thereby ensuring that the battery subrack is stably placed on the subrack storage frame 100.

In the subrack storage frame 100 of the disclosure, through setting the reinforcing plate 13, the supporting strength of the supporting plate 12 can be improved, thereby ensuring that the battery subrack is stably placed on the subrack storage frame 100. Through setting the limiting plate 11, the battery subrack can be accurately installed in place, and the battery subrack is prevented from being suspended during the placement process, thereby further ensuring that the battery subrack is stably placed on the subrack storage frame 100.

Further, as shown in FIG. 2 and FIG. 3, the surface of the limiting plate 11 facing the battery subrack is connected to a connector. Specifically, the connector is located right above the supporting plate 12, and the connector is configured to be inserted into and match with the battery subrack. Specifically, the connector is a plug 40. The rear side surface of the battery subrack is provided with a socket that matches with the plug 40. Through the insertion and the matching of the plug 40 and the socket, the battery subrack is positioned on the subrack storage frame 100, wherein the specific number of the plugs 40 may be set according to actual usage requirements. One, two, three, or more than three plugs 40 may be set. Preferably, the limiting plate 11 is connected to two plugs 40 spaced apart to ensure the stability of the matching with the battery subrack.

The plug 40 may be connected to the limiting plate 11 by welding, may also be connected to the limiting plate 11 through bolts, or may be fixedly connected to the limiting plate 11 through rivets, as long as any prior art for connecting the plug 40 to the limiting plate 11 is satisfied, the same should be included within the protection scope of the disclosure.

Of course, the connector may also be a slot disposed on the limiting plate 11. The rear side surface of the battery subrack is provided with a plug that matches with the slot, so that the battery subrack may be positioned on the subrack storage frame 100 through the insertion and the matching of the plug and the slot.

Further, a distance D between the connector and the supporting plate 12 is less than the height of the battery subrack to prevent the setting position of the connector from being too high and unable to be inserted into and match with the battery subrack, thereby ensuring the stable positioning of the battery subrack on the subrack storage frame 100.

Further, as shown in FIG. 2 and FIG. 3, the upper end of the limiting plate 11 is provided with a first hem 111 that can abut the battery subrack. Specifically, the first hem 111 and the supporting plate 12 are disposed parallel to each other, the first hem 111 is located above the plug 40, the first hem 111 can not only protect the plug 40, but also increase the strength of the limiting plate 11, and can also adjust the position of the battery subrack on the subrack storage frame 100, that is, through adjusting the size of the first hem 111, the position of the battery subrack on the subrack storage frame 100 may be adjusted, and along the extension direction of the connector (the plug 40), the length of the first hem 111 is less than the length of the supporting plate 12, so that the first hem 111 neither affects the supporting effect of the first beam 10 on the battery subrack, nor affects the insertion and the matching between the plug 40 and the battery subrack.

Further, as shown in FIG. 2 and FIG. 3, one end of the first hem 111 connected to the limiting plate 11 is a connection end, and the end of the first hem 111 opposite to the connection end is a free end. The free end of the first hem 111 is provided with a flange 112 extending toward the supporting plate 12. The connector (the plug 40) penetrates through the flange 112. Specifically, a through hole is formed on the flange 112 at a position corresponding to the plug 40, and the plug 40 passes through the through hole. The setting of the flange 112 can not only increase the contact area between the first hem 111 and the battery subrack to increase the strength of the first hem 111 against the battery subrack, that is, to use the flange 112 to buffer the force generated when the battery subrack is inserted, that is, to use the flange 112 to strengthen the first hem 111, thereby ensuring the service life of the first hem 111, but can also position the plug 40 to stably place the plug 40, so that the plug 40 can be smoothly inserted into and match with the battery subrack.

It should be noted that when the connector has a slot structure, and the battery subrack is provided with a plug, it is sufficient to correspondingly connect the slot and the through hole.

Further, a distance d between the connector (the plug 40) and the first hem 111 is less than or equal to 90% of the height of the battery subrack, and the distance d between the connector (the plug 40) and the first hem 111 is greater than or equal to 2% of the height of the battery subrack. Exemplarily, the distance d between the connector (the plug 40) and the first hem 111 is 1 mm to 50 mm. Such a structure can not only prevent the distance d between the connector (the plug 40) and the first hem 111 from being too small, resulting in the impact force directly acting on the subrack to damage the subrack during the process of insertion and matching of the subrack and the connector, but can also prevent the distance d between the connector (the plug 40) and the first hem 111 from being too large, causing the flange 112 to be easily broken due to the impact force, such that the buffer performance cannot be achieved.

Further, as shown in FIG. 2 and FIG. 3, the flange 112 and the limiting plate 11 are disposed parallel to each other. Such a structure not only facilitates the positioning of the through hole, but also facilitates the penetration of the plug 40 through the flange 112, while ensuring the maximum contact area between the flange 112 and the battery subrack.

Further, as shown in FIG. 2 and FIG. 3, there is a first gap 14 between the flange 112 and the supporting plate 12, that is, the projection area of the flange 112 on the limiting plate 11 is less than the area of the limiting plate 11. Such a structure can use the flange 112 to strengthen the first hem 111 without increasing the overall weight of the first beam 10.

Further, as shown in FIG. 2 and FIG. 3, two ends of the limiting plate 11 are both provided with second hems 113. The first hem 111 and the flange 112 are both connected to the second hems 113, that is, the first hem 111, the flange 112, and the two second hems 113 surround to form a hollow structure with an open lower end, thereby further increasing the overall strength of the first beam 10.

Further, as shown in FIG. 2 and FIG. 3, there is a second gap 15 between the second hem 113 and the supporting plate 12, that is, the second hem 113 is not in contact with the supporting plate 12. The second gap 15 can be inserted into and match with the second beam 20 to position the connection between the second beam 20 and the first beam 10, and increase the contact area between the second beam 20 and the first beam 10, thereby improving the connection strength between the second beam 20 and the first beam 10.

Further, as shown in FIG. 2 and FIG. 3, the lower end of the reinforcing plate 13 is provided with a third hem 131. The third hem 131 increases the strength of the reinforcing plate 13 and further improves the overall strength of the first beam 10, wherein the third hem 131 may extend toward the limiting plate 11, and may also extend away from the limiting plate 11. In order to reduce the overall size of the first beam 10, and to facilitate placement, preferably, the third hem 131 extends toward the limiting plate 11, and the third hem 131 is disposed substantially parallel to the supporting plate 12.

### Embodiment 2

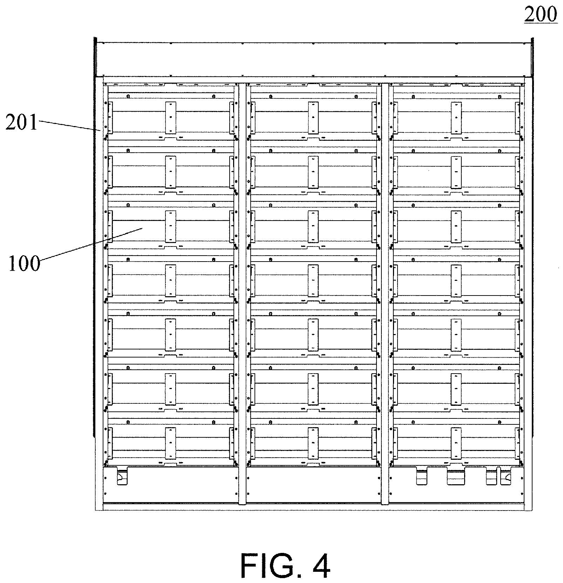

As shown in FIG. 4, the disclosure also provides the energy storage frame 200, which includes the subrack storage frame 100. Specifically, the energy storage frame 200 includes a frame 201. The subrack storage frame is installed in the frame 201.

The energy storage frame of the disclosure has the subrack storage frame, so the energy storage frame has the advantage of being able to stably place a large battery subrack.

Further, as shown in FIG. 4, the energy storage frame further includes a column 2011. Specifically, the frame 201 includes the column 2011. The subrack storage frame 100 further includes the second beam 20. One end of the first beam 10 is connected to the second beam 20, and the second beam 20 is connected to the column 2011, that is, the subrack storage frame 100 is connected to the column 2011 through the second beam 20.

Further, multiple subrack storage frames 100 disposed at intervals are connected on the column 2011 from top to bottom. Specifically, the inner space of the frame 201 is divided through the subrack storage frames 100 to form multiple accommodating cavities. One battery subrack may be inserted into each accommodating cavity. Each battery subrack is supported through one subrack storage frame 100.

### Embodiment 3

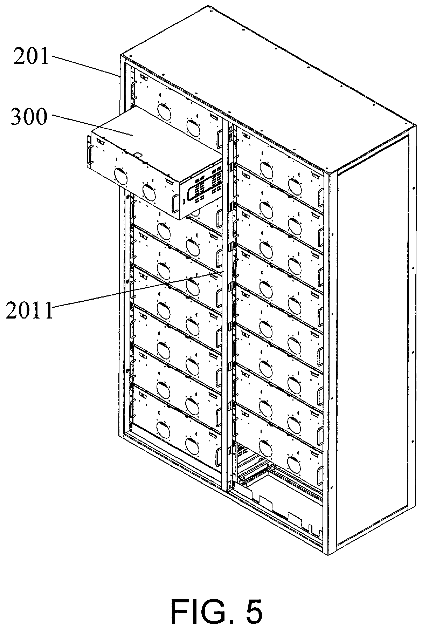

As shown in FIG. 5, the disclosure also provides an energy storage battery cluster, which includes the energy storage frame 200 and at least one battery subrack 300. The battery subrack 300 is inserted into the energy storage frame 200, wherein the number of the battery subracks 300 may be adjusted according to actual usage requirements and the capacity of the energy storage frame 200.

The energy storage battery cluster of the disclosure has the energy storage frame, so the energy storage battery cluster has the advantage of stable placement of a large battery subrack.

In summary, in the subrack storage frame of the disclosure, through setting the reinforcing plate, the supporting strength of the supporting plate can be improved, thereby ensuring that the battery subrack is stably placed on the subrack storage frame. Through setting the limiting plate, the battery subrack can be accurately installed in place, which prevents the battery subrack from being suspended during the placement process, thereby further ensuring that the battery subrack is stably placed on the subrack storage frame.

In the subrack storage frame of the disclosure, through setting the first hem and setting the flange on the first hem, the contact area between the first hem and the battery subrack is increased to increase the strength of the first hem against the battery subrack, that is, to strengthen the first hem, thereby ensuring the service life of the first hem. Also, the flange is used to position the plug to stably place the plug, so that the plug can be smoothly inserted into and match with the battery subrack.

In the subrack storage frame of the disclosure, through setting the third hem at the lower end of the reinforcing plate, the strength of the reinforcing plate is increased, thereby further improving the overall strength of the first beam.

The energy storage frame of the disclosure has the subrack storage frame, so the energy storage frame has the advantage of being able to stably place a large battery subrack.

The energy storage battery cluster of the disclosure has the energy storage frame, so the energy storage battery cluster has the advantage of stable placement of a large battery subrack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A subrack storage frame (100), comprising a first beam (10) formed by bending a sheet metal, wherein the first beam (10) comprises a limiting plate (11), a supporting plate (12), and a reinforcing plate (13), the limiting plate (11) and the reinforcing plate (13) are respectively connected to two sides of the supporting plate (12), the limiting plate (11) is located above the supporting plate (12), the reinforcing plate (13) is located below the supporting plate (12), the supporting plate (12) is configured to support a battery subrack, and the limiting plate (11) is configured to abut the battery subrack along an insertion direction of the battery subrack.

2. The subrack storage frame (100) according to claim 1, wherein:
a surface of the limiting plate (11) facing the battery subrack is connected to a connector (40), and the connector (40) is configured to be inserted into and match with the battery subrack.

3. The subrack storage frame (100) according to claim 2, wherein:
a distance (D) between the connector (40) and the supporting plate (12) is less than a height of the battery subrack.

4. The subrack storage frame (100) according to claim 2, wherein:
an upper end of the limiting plate (11) is provided with a first hem (111) abutting the battery subrack, and a length of the first hem (111) is less than a length of the supporting plate (12) along an extension direction of the connector (40).

5. The subrack storage frame (100) according to claim 4, wherein:
a free end of the first hem (111) is provided with a flange (112) extending toward the supporting plate (12), and the connector (40) penetrates through the flange (112).

6. The subrack storage frame (100) according to claim 5, wherein:
a distance (d) between the connector (40) and the first hem (111) is less than or equal to 90% of a height of the battery subrack.

7. The subrack storage frame (100) according to claim 6, wherein:
the distance (d) between the connector (40) and the first hem (111) is greater than or equal to 2% of the height of the battery subrack.

8. The subrack storage frame (100) according to claim 5, wherein:
the flange (112) and the limiting plate (11) are disposed parallel to each other.

9. The subrack storage frame (100) according to claim 5, wherein:
there is a first gap (14) between the flange (112) and the supporting plate (12).

10. The subrack storage frame (100) according to claim 5, wherein:
two ends of the limiting plate (11) are both provided with second hems (113), and the first hem (111) and the flange (112) are both connected to the second hem (113).

11. The subrack storage frame (100) according to claim 10, wherein:
there is a second gap (15) between the second hem (113) and the supporting plate (12).

12. The subrack storage frame (100) according to any one of claims 1-11, wherein:
a lower end of the reinforcing plate (13) is provided with a third hem (131).

13. An energy storage frame (200), comprising the subrack storage frame (100) according to any one of claims 1-12.

14. The energy storage frame (200) according to claim 13, wherein the energy storage frame (200) further comprises a column (2011), and a plurality of the subrack storage frames (100) disposed at intervals are connected on the column (2011) from top to bottom.

15. An energy storage battery cluster, comprising the energy storage frame (200) according to claim 13 or 14 and at least one battery subrack, wherein the battery subrack is inserted into the energy storage frame (200).
